# DEMANDE DE BREVET EUROPEEN

(11) **EP 0 996 266 A1**
(43) Date de publication de la demande: **26.04.2000**
(21) Numéro de dépôt: 99402454.5
(22) Date de dépôt: 07.10.1999
(51) Int. Cl.: H04L 29/06, G06F 17/30, G06F 17/60

(54) **Procédé pour mettre à jour ou remplacer un site web**

(30) Priorité: 21.10.1998 FR 9813213
(71) Demandeur: ALCATEL, 75008 Paris (FR)
(72) Inventeur: Gros, Jérome, 92400 Courbevoie (FR); Jolly, Isabelle, 75014 Paris (FR)
(74) Mandataire: Lamoureux, Bernard

(57) **Abrégé**

Procédé pour changer automatiquement une information contenue dans une page qui est visuellement et/ou auditivement présentée par un terminal de communication, ladite information étant transmise par un serveur sous forme d'un ensemble de données, caractérisé en ce que lesdites données contiennent de surcroît une indication de renouvellement associée à ladite information, et en ce que ledit terminal se connecte à un deuxième serveur en fonction de ladite indication de renouvellement afin d'obtenir une nouvelle information, et mettre à jour ladite page.

## Description

L'invention concerne un procédé pour changer automatiquement une information visuellement et/ou auditivement présentée par un terminal de communication à partir d'un ensemble de données transmises par un serveur.

Dans le cadre du développement des réseaux d'échange d'informations de type Internet ou Intranet, il est connu de transmettre des informations sous forme visuelle et/ou auditive à des usagers qui sont équipés de terminaux de communication multimédia leur permettant de demander, recevoir et échanger des informations par l'intermédiaire de serveurs leur donnant notamment accès à des sources d'informations.

Les terminaux de communication susceptibles d'être exploités pour un tel usage sont par exemple des ordinateurs multimédia dotés de moyens leur permettant de communiquer par l'intermédiaire d'un réseau de communication, tel que par exemple un réseau téléphonique commuté, ou encore des terminaux de communication qui comportent une logique programmée et des moyens d'affichage et de transcription sonore en plus des moyens qui leur permettent de se connecter à un réseau de communication. De manière courante, l'utilisateur d'un tel terminal se voit présenter une ou plus généralement plusieurs informations sur l'écran du terminal de communication qu'il exploite, lorsqu'il est entré en liaison avec un serveur à des fins de communication et en particulier lorsqu'il est en liaison avec une source d'informations auquel ce serveur lui donne accès. Comme il est connu, les informations sont regroupées par pages et une page présentée sur un écran d'un terminal est susceptible de comporter plusieurs informations provenant de sources différentes

Les informations sont réparties dans différentes zones de l'écran du terminal qui les reçoit et elles peuvent évoluer de manière indépendante. Il est notamment courant de voir présentées simultanément sur un écran des informations qui sont affichées de manière permanente, jusqu'à ce que leur changement soit déclenché par l'usager, et d'autres qui évoluent indépendamment de l'utilisateur, sous le contrôle d'un module de programme importé ou distant.

Pour différentes raisons et notamment pour des raisons commerciales, il est souhaitable de pouvoir agir sur les informations évolutives pour en maîtriser l'évolution depuis le serveur ou depuis un intervenant qui fournit ou gère ces informations. Or actuellement de telles possibilités d'intervention ne sont pas prévues dans la mesure où il n'est pas prévu de transmission d'information à cet effet d'un serveur vers un terminal, lorsque l'usager ne déclenche pas lui-même une nouvelle demande d'information.

Il est connu d'utiliser une fonction du langage HTML appelée "Meta Equiv Refresh". Toutefois, cette fonction possède comme inconvénient majeur de ne permettre le changement périodique que d'une page en entier. Avec une telle solution, il n'est donc pas possible de ne changer périodiquement qu'une information particulière contenue dans cette page. Or, comme il a été dit, les différentes informations contenues dans une page peuvent provenir de sources différentes, et de ce fait nécessiter des délais de rafraîchissement différents.

De plus, une telle façon de faire est peu efficace puisqu'en nécessitant la retransmission de la page en entier lors de chaque rafraîchissement, elle engendre un encombrement des canaux de transmission ainsi que du serveur ou des serveurs.

L'invention propose donc un procédé pour changer automatiquement une information contenue dans une page qui est visuellement et/ou auditivement présentée par un terminal de communication, cette information étant transmise par un serveur sous forme d'un ensemble de données. L'invention se caractérise en ce que ces données contiennent de surcroît une indication de renouvellement associée à ladite information, et en ce que le terminal se connecte à un deuxième serveur en fonction de l'indication de renouvellement afin d'obtenir une nouvelle information, et mettre à jour la page en question.

Généralement, les premier et deuxième serveurs sont confondus, toutefois, selon une mise en oeuvre de l'invention ils peuvent être disjoint et, dans ce cas, on peut prévoir que les données contiennent, en sus, l'adresse de ce deuxième serveur.

Selon une mise en oeuvre de l'invention, l'indication de renouvellement est un délai au bout duquel le terminal se connecte au deuxième serveur.

Selon une autre mise en oeuvre de l'invention, l'indication de renouvellement est une fréquence selon laquelle le terminal se connecte au deuxième serveur.

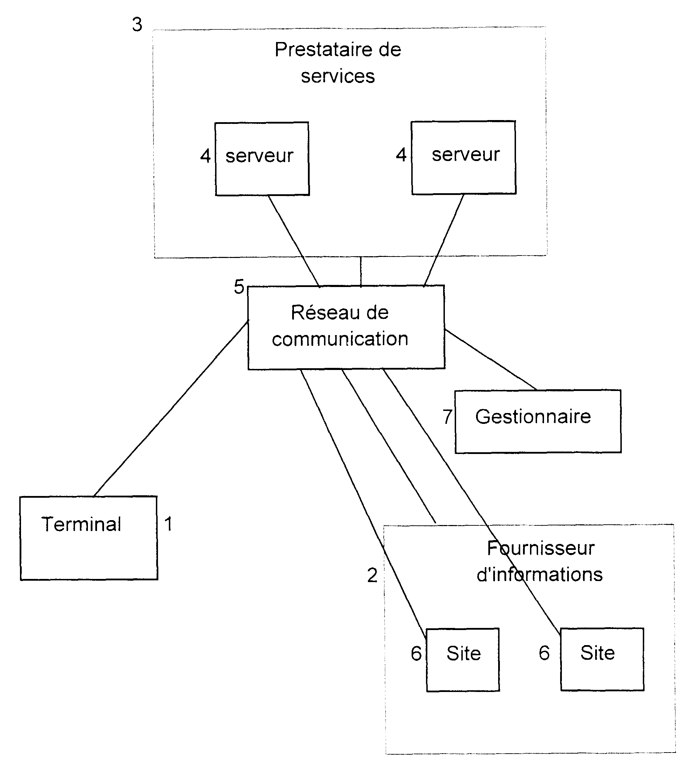

L'invention, ses caractéristiques et ses avantages sont précisés dans la description qui suit en liaison avec la figure unique évoquée ci-dessous.

Cette figure présente un schéma de principe d'un ensemble de communication dans le cadre duquel est prévu la mise en oeuvre du procédé selon l'invention.

L'ensemble de communication présenté est destiné à permettre la mise en communication d'une pluralité de terminaux de communication 1, symbolisés par l'un d'entre eux, avec au moins un fournisseur d'informations 2, par l'intermédiaire d'au moins un prestataire de services 3 disposant de serveurs 4 auxquels les terminaux peuvent se connecter, via un réseau de communication 5.

Un fournisseur d'informations 2 dispose d'au moins un site 6 dans lequel sont stockées des données correspondant à des informations susceptibles d'être présentées par affichage et/ou par voie sonore au moyen d'un terminal 1 à un usager. Cette présentation est réalisée après connexion de ce terminal à un serveur 4 d'un prestataire de services 3, notamment dit à valeur ajoutée, par l'intermédiaire d'un réseau de communication 5 auquel l'un et l'autre sont raccordés. Comme connu, un gestionnaire 7 raccordé au réseau de communication 5 comme le prestataire de service 3 et le fournisseur d'informations 2, peut également intervenir pour coordonner les présentations d'information sur différents terminaux 1, à partir de différents sites d'un ou de plusieurs fournisseurs d'informations 2 et par l'intermédiaire de serveurs 4 d'un ou de plusieurs prestataires, en fonction d'accords de diffusion prévus à cet effet. Ainsi, à titre d'exemple, une société souhaitant afficher des informations commerciales relatives à ses produits peut stocker dans différents sites, propres ou partagés avec d'autres, les données correspondant aux informations à présenter visuellement et/ou auditivement à des usagers équipés de terminaux 1 appropriés.

Les terminaux accèdent aux informations stockées dans un site par l'intermédiaire d'un serveur 4, éventuellement choisi parmi plusieurs par l'usager en relation avec les possibilités qui lui sont offertes par un ou plusieurs prestataires de services . Le gestionnaire est par exemple chargé de définir les critères présidant à la communication des informations aux usagers en fonction des accords susceptibles d'être passés entre les fournisseurs d'information et les prestataires de service.

Ainsi, un terminal entrant en communication avec un serveur pour le compte d'un usager reçoit un ensemble de données destinées à être présentées à cet usager. Ces données peuvent correspondre à des informations provenant de sources différentes qui sont groupées à des fins de présentation simultanée ou quasi-simultanée. Cette présentation simultanée peut être coordonnée à différents niveaux, par exemple par un fournisseur 2, par un prestataire de services 3, ou par un gestionnaire 7 suivant le type d'exploitation choisie. Dans la forme la plus classique de mise en oeuvre, diverses informations sont susceptibles d'être simultanément présentées sur différentes parties d'une page affichée sur un écran. L'affichage est éventuellement complété par un accompagnement sonore par l'intermédiaire d'un transducteur approprié du terminal considéré. Comme déjà indiqué plus haut, des informations réparties dans des zones différentes d'une page sur l'écran d'un terminal peuvent éventuellement évoluer de manière indépendante les unes des autres. Ceci concerne en particulier les informations affichées dans des emplacements de type bandeau qui sont susceptibles d'être changées à un rythme relativement rapide, comme peuvent l'être des informations brèves, générales ou spécialisées et notamment publicitaires.

Il est bien entendu possible de laisser à l'usager la maîtrise du rythme de changement de telles informations, mais cette solution n'est pas très satisfaisante dans la mesure où l'utilisateur peut préférer ne pas avoir à intervenir à l'occasion de tels changements. Par ailleurs le fournisseur, le prestataire de services et/ou le gestionnaire peuvent souhaiter que ces changements s'effectuent d'une manière programmée qu'il(s) maîtrise(nt).

Selon l'invention, il est donc prévu d'ajouter une indication de renouvellement à l'ensemble de données transmis pour la présentation d'une information par un terminal de communication, cet ensemble étant éventuellement transmis avec d'autres ensembles de données relatifs aux diverses informations simultanément présentées au niveau de ce terminal, et plus particulièrment sur une même page.

Comme dit précédemment, l'indication de renouvellement peut être un délai. Il peut varier d'une information à la suivante notamment lorsque l'information concernée est une information dont la présentation évolue pendant la période de temps où elle est affichée. Il peut encore varier, si une information est constituée par une succession d'éléments d'information successivement présentés ou se substituant graduellement l'un à l'autre au cours du laps de temps pendant lequel est présentée l'information qu'ils constituent ensemble.

Comme dit précédemment, l'indication de renouvellement peut aussi être une fréquence. C'est notamment le cas pour une information constituée d'éléments se présentant successivement ou se substituant l'un à l'autre comme indiqué ci-dessus.

Dans chacun des cas d'ajout d'indication à un ensemble de données relatives à une information particulière, tels que succinctement définis précédemment, il est prévu que cette indication soit prise en compte par un module logiciel d'exploitation qui assure la gestion de l'affichage de l'information concernée au niveau du terminal récepteur. Ce module logiciel peut éventuellement être initialement incorporé dans le terminal, il peut également être un applet transmis parmi les données fournies par un serveur pour constituer une page incluant l'information.

A réception d'une indication de renouvellement avec des données relatives à une information, le module logiciel d'exploitation prend en compte le délai ou la fréquence fixée pour le changement d'information et assure le déclenchement d'une demande en renouvellement d'image par le terminal, auprès du serveur qui a fourni l'information précédente ou bien auprès d'un second serveur, déterminé par une adresse transmise avec les données fournies par le premier serveur. L'ensemble des données fournies à cette occasion à un terminal pour une nouvelle présentation d'information peut à nouveau être accompagné d'une nouvelle indication de renouvellement, en particulier si l'indication de renouvellement est un délai qui est modifié d'une image à la suivante.

La prise en compte d'une indication de fréquence de présentation, reçue associée à un ensemble de données tr ansmis à un terminal pour la présentation d'une information constituée d'éléments se présentant successivement ou se substituant l'un à l'autre, est assurée par le module logiciel d'exploitation chargé de la gestion de cette information au niveau du terminal. Elle est exploitée aux fins d'application à l'information qu'elle accompagne et éventuellement aux informations suivantes jusqu'à réception d'une nouvelle indication, si une telle indication n'est pas fournie avec chacune de ces informations.

Selon l'invention, il est aussi prévu d'ajouter une indication d'adresse d'un serveur de remplacement à l'ensemble de données relatives à une information qui sont transmises par un serveur à un terminal. Ceci est par exemple prévu, lorsque la charge du serveur alors utilisé devient trop importante et qu'il existe un autre serveur moins chargé pouvant se substituer à lui. Ce dernier fournit alors les informations qui normalement suivent au moins la dernière des informations déjà reçues par un terminal.

D'une manière analogue à celle envisagée dans les deux cas évoqués plus haut, le module logiciel d'exploitation chargée de la prise en compte de cette indication d'adresse déclenche alors la déconnexion du terminal qui le comporte par rapport au premier serveur auquel il était connecté. Il assure ensuite une connexion au serveur dont l'adresse lui a été indiquée en vue d'obtenir de ce dernier l'information qui suit celle qui a été reçue en dernier par le terminal.

## Revendications

1. Procédé pour changer automatiquement une information contenue dans une page qui est visuellement et/ou auditivement présentée par un terminal de communication (1), ladite information étant transmise par un premier serveur (4) sous forme d'un ensemble de données, caractérisé en ce que lesdites données contiennent de surcroît une indication de renouvellement associée à ladite information, et en ce que ledit terminal se connecte à un deuxième serveur en fonction de ladite indication de renouvellement afin d'obtenir une nouvelle information, et mettre à jour ladite page.

2. Procédé selon la revendication 1, caractérisé en ce que ladite indication de renouvellement est un délai au bout duquel ledit terminal se connecte audit deuxième serveur.

3. Procédé selon la revendication 1, caractérisé en ce que ladite indication de renouvellement est une fréquence selon laquelle ledit terminal se connecte audit deuxième serveur.

4. Procédé selon l'une des revendications précédentes, caractérisé en ce que ledit premier serveur et ledit deuxième serveur sont confondus.

5. Procédé selon l'une des revendications 1 à 3, caractérisé en ce que lesdites données contiennent de surcroît l'adresse dudit deuxième serveur.
